Europäisches Patentamt

European Patent Office

Office européen des brevets

(11) Publication number: **0 128 183**
**B1**

# EUROPEAN PATENT SPECIFICATION

(45) Date of publication of patent specification: **12.04.89**   (51) Int. Cl.⁴: **G 01 N 21/88**

(21) Application number: **84900092.2**

(22) Date of filing: **14.12.83**

(86) International application number:
**PCT/GB83/00332**

(87) International publication number:
**WO 84/02398 21.06.84 Gazette 84/15**

(54) INSPECTION APPARATUS AND METHOD.

(30) Priority: **15.12.82 GB 8235719**
**26.10.83 GB 8328596**

(43) Date of publication of application:
**19.12.84 Bulletin 84/51**

(45) Publication of the grant of the patent:
**12.04.89 Bulletin 89/15**

(84) Designated Contracting States:
**AT BE CH DE FR LI LU NL SE**

(56) References cited:
**DE-B-2 851 750**
**US-A-3 620 593**
**US-A-3 635 552**
**US-A-3 892 494**
**US-A-4 299 451**

**IBM Technical Disclosure Bulletin, vol. 16, no. 7, published in December 1973 (New York, US). R. Wohl: "Automatic integrated circuit mask defect detection system", pages 2143-2145**

(73) Proprietor: **Cogent Limited**
**Temple Court 11 Queen Victoria Street**
**London, EC4N 4TP (GB)**

(72) Inventor: **BAKER, Lionel, Richard**
**21 Long Acre**
**Orpington, Kent (GB)**

(74) Representative: **Calderbank, Thomas Roger et al**
**MEWBURN ELLIS & CO. 2/3 Cursitor Street**
**London EC4A 1BQ (GB)**

Courier Press, Leamington Spa, England.

## Description

The present invention relates to an apparatus and method for use in inspection. The object to be inspected may in some instances comprise the surface of a lens or mirror surface, or may comprise other types of surface such as paper, steel, tinplate or a painted surface.

The present invention includes apparatus and method for comparing defects with standard defects. Such a technique may be used to provide a predetermined standard for a surface under test which is not subjective as are most techniques at present.

Standard scratches have been made by the following means:

Ruling
Chemical etching
Ion-beam etching
Thin film deposition
Fibres
Replication

Each of these techniques has its own advantages and disadvantages in terms of, for example, range of visibility covered, cost, sensitivity to ageing and relative visibility change under different viewing conditions.

Through this specification we refer to "light" and "optical" and similar language which implies the use of radiation of an optical wave length. However it should be understood that the techniques described are applicable, with suitable adjustment to the components, to radiation of infra-red and ultra-violet and the invention is to be understood as extending to radiation of wave lengths from infra-red to ultra-violet.

We also use the word "defect". When examining the surfaces of optical components such as lenses for faults then the word takes its natural meaning but in many applications it may include any image forming means. It may include in its broadest sense, test patterns, absorption lines, and cells.

Reference may be made to IBM's Technical Disclosure Bulletin volume 16 No. 7 December 1973 pages 2143 to 2145. This discloses an arrangement to detect differences between two otherwise identical images by passing light alternately through the two images so as to obtain a flicker indicating any difference between the two images. Such an arrangement will merely show up a difference between two otherwise similar images, but will not allow one, for example, to compare a defect with a discrete reference defect. In the present instance the two defects being examined may be of substantially different shape and will not be aligned whereas in the IBM document the two patterns must be exactly aligned.

We also refer to US Specification 3620593. This document is less relevant than the IBM document and many of the same above comments apply, including that the two images should be properly aligned.

The present invention provides apparatus for comparing an object with a reference object, said object comprising a defect, or an image forming means, or a test pattern, or an absorption line, or a cell, said apparatus comprising:

means for producing two beams of radiation of a wavelength within the range from infra red to ultra violet,

first means for passing a first of the beams to the object under examination so that part only of said first beam is influenced by the object under examination,

second means for passing a second of the beams to the reference object so that part only of said second beam is influenced by the reference object,

means for passing the first and second beams from both the objects to a comparator means,

a background radiation varying means for varying the relative intensities of the beams received by the comparator means in such a way that the sum of the intensities of the two beams remain substantially constant,

characterised in that the comparator means is adapted to form and compare images of the two objects and includes adjustable means to adjust the relative intensities of the images until they are in a predetermined relationship whilst the sum of the intensities of the two beams remain substantially constant, whereby this adjustment of the adjustable means provides an indication of the effect on radiation of the object under examination.

The present invention also provides a method for comparing an object with a reference object, said object comprising a defect, or an image forming means, or a test pattern, or an absorption line, or a cell, said method comprising:

providing two beams of radiation, of a wavelength within whe range from infra red to ultra violet,

passing one beam to the object under examination so that part only of said one beam is influenced by that object,

passing the second beam to the reference object so that part only of said second beam is influenced by the reference object, and,

combining the two beams and examining the combined beam,

the method being characterised by forming images of the objects, and adjusting the relative intensities of the images to be in a predetermined relationship to one another whilst the sum of the intensities of the two beams remain substantially constant, said adjustment providing an indication of the effect on radiation of the object under examination.

Preferred embodiments of the invention will now be described by way of example only and with reference to the accompanying drawings in which:

Figure 1 is a diagrammatic side view of a surface inspection apparatus according to the present invention,

Figure 2 is a graph showing various signals produced in use of the apparatus of Figure 2,

Figure 3 is a diagrammatic side view of an alternative surface inspection apparatus,

Figures 4A to 4D show variation in visibility of four British Standard scratches,

Figures 5A to 5C show typical TV displays produced by the apparatus of Figure 3,

Figure 6 is a diagrammatic side view of another surface inspection apparatus according to the invention, and,

Figures 7 and 8 are details of part of the apparatus of Figure 6.

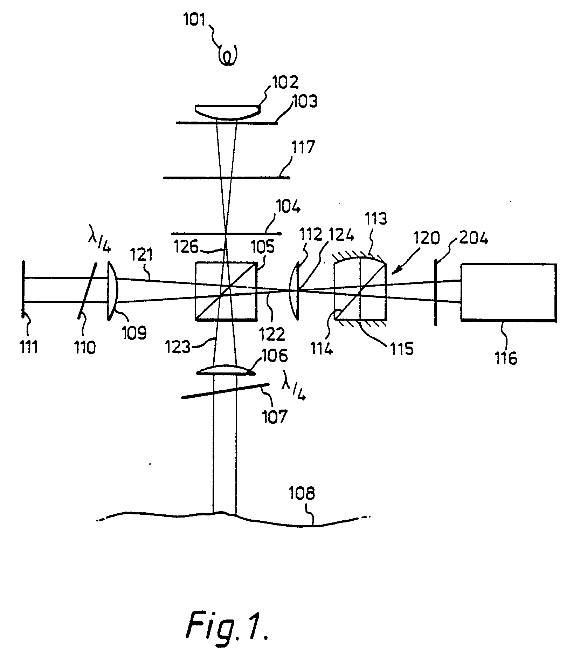

In Figure 1 a light source 101 is imaged onto a pinhole 104 by a lens 102, the light passing through a polariser 117 and iris diaphragm 103 arranged between the lens 102 and pinhole 104. The iris diaphragm 103 restricts the area of surface 108 which is illuminated for inspection and measurement. If the surface is of short radius of curvature, only an area sufficiently small to be considered flat is illuminated. The light transmitted by pinhole 104, which is at the focus of a lens 106 is divided by a polarising beam splitter 105 into two beams 123 and 121, the beam 123 passing to the surface 108 via lens 106. The ratio of intensity of the two beams 121 and 123 can be controlled by rotating the polariser 117. The transmitted beam 123 is collimated by the lens 106 and passes through a quarter-wave retardation plate 107 before striking the surface 108 at normal incidence and the reflected beam passes through the quarter-wave retardation plate 107 again. At this point when the beam returns to the polarising beam splitter 105 its polarisation is changed by 180° and is reflected by the polarising beam splitter 105 to form beam 122 and is brought to a spot focus 124 in the plane of a lens 112. The lens 112 is used to form an image of 108 on the image plane of the TV camera 116.

A focusing beam splitter 120 reflects a fraction of the incident beam 122 onto a concave reflective surface 113 and back down onto a flat reflective surface 115 and thereafter from the diagonal surface 114 to focus an image of the spot 124 through a polariser 204 onto TV camera 116. Thus the TV camera effectively receives two sets of images, one a direct image of the part of the surface 108 under inspection which will show the surface defects, and secondly a central spot whose position is determined by the tilt of the surface 108. The first of these images, that is the image of the part of the surface under inspection is formed by the lenses 106 and 112 whilst the second, spot, image is formed by lenses 106 and 112 and the focusing surface 113 of the focusing beam splitter 120.

In addition to the position of the central spot indicating the tilt of the surface 108, the spread of the central spot is influenced by the scattering produced by the surface 108.

The portion of the beam from the light source 101 which is reflected at the polarising beam splitter 105 and which forms the beam 121 is used to illuminate a standard or reference surface 111 which may carry a reference defect and/or measuring graticule. Before striking the surface 111, the beam 121 passes through the lens 109 and surface 111, and quarter wave retardation plate 110 and a beam from the surface 111 passes through the plate 110 and lens 109 again before returning to the beam splitter 105. Thus an image of the surface 111 is brought to a focus on the image plane of the TV camera 116 by means of the lenses 109 and 112. Thus in addition to the two images already referred to above, there is a third image relating to the reference defect. There is also a fourth image due to the autocollimated beam from surface 111 also being focused by concave reflective surface 113 onto camera 116. This spot, together with the image of surface 111 can be removed by rotating polariser 204.

The severity of a particular defect on the surface 108 is measured as follows. Initially the light reflected from surface 108 and from surface 11 must be equalised (ignoring the defects). This is carried out by rotation of the polariser 117 back and forth through about 10° which thereby alters the angle of polarisation of the incident beam 126 and therefore varies the proportion of the beam which is reflected or transmitted by the polarising beam splitter. Generally, this variation of the relative proportion of the beam which is reflected or transmitted by the beam splitter 105 will cause a change of the light received by the TV camera 116 in synchronism with the rotation of the polariser 117. If, however, the light reflected by the surfaces 111 and 108 is exactly the same then a small increase in the light passed to one will be compensated by small decrease in the light passed to the other and the total light received by the camera 116 will remain the same. Thus to reach this balance point it is necessary to rotate the polariser 117 back and forth by about 10° and slowly rotate the second polariser 204 until at a particular position of rotation of polariser 204 the reciprocal rotation of polariser 117 will have no effect on the light output of TV camera 116. At this point the light reflected by the two surfaces 108, 111 is equalised.

In the next step of the process to measure the severity of a particular defect on the surface 108 it is desired to vary the intensity of the image of the defect under consideration with respect to the intensity of the image of the reference defect. This can be simply done by varying the relative intensities of the beams 121 and 123. this can be simply effected by rotation of the polariser 117 which thereby alters the angle of polarisation of the incident beam 126 and therefore varies the proportion of that beam which is reflected or transmitted by the polarising beam splitter 105. It will be noted, however, that although the relative intensities of the two beams are changed, the sum of the two intensities is the same and remains substantially constant. As the polariser 117 is rotated the intensity of the image of the reference defect will increase and the intensity of the image of the defect under examination will decrease and vice versa whilst the background illumination remains the same. With very little experience it is a simple matter for the two images to be arranged to be of equal intensity. The angle of the polariser can then be used as a non-subjective measure of the severity of the defect under examination.

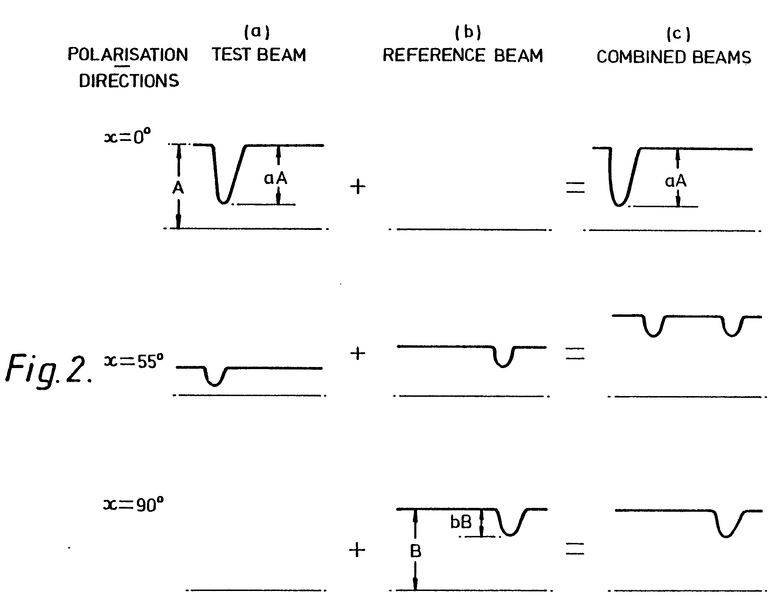

We refer now to Figure 2. Figure 2 shows for each of three directions of the polariser 117 (0°, 55°, 90°) the distribution of light intensity across, in the case of a column (a) a defect from the surface 108 under test, in the case of column (b) the reference defect, and in the case of column (c) the combined intensity signal. The intensity of the defect on the surface under test has approximately twice the severity of the reference defect in this example. As the intensity in one beam varies according to the laws of Malus as $Cos^2x$, the other beam varies as $sin^2x$ and the sum of both beams, the second of which is polarised at right angles, is constant but the visibility of the reference defect and defect under test can be varied continuously and the value of x where balance is achieved is a measure of the optical severity of the test defect compared with the standard.

According to Figure 2 is the peak intensity of the test beam (x=0°) is A and the intensity at the point of minimum intensity of the image of the defect under test as A(1−a) and the peak intensity of the reference beam is B (x=90°) with the intensity of the reference defect image as B(1−b), then the intensities in the combined beams again at the minimum intensity points is:

$$I_1=A(1-a)\cos^2x+B\sin^2x \qquad (i)$$

$$I_2=A\cos^2x+B(1-b)\sin^2x \qquad (ii)$$

If now x is adjusted to make $I_1=I_2$, then from equations (i) and (ii) it may be shown that

$$\tan^2x=Aa/Bb \qquad (iii)$$

If now either quarter-wave retardation plates 107 or 110 are rotated so as to make A=B, and preferably another polariser 117A is rotated in the combined channel, the value of a defect a can be calculated directly from the value of a reference defect b.

Thus if the test defect is twice as severe as the reference, ie a/b=2, then x=55° or 10° higher than it would be if the test and reference defect were of equal severity when of course x=45°.

Repeat measurements made on the same scratch indicate a precision of ±1° and this corresponds to a 7% change in scratch visibility. Using a single internal comparison defect, the preferred operating range of defect visibility is 64:1 or from one eighth to 8 times the visibility of the internal comparison defect. The instrument is designed to quantify the visibility of defects below the resolution limit of the optical system so that their images can be treated as diffraction limited lines and points. For example, if lens 106 has an NA of 0.02, defects of width less than, say, 25 micron can be quantified.

It will be realised that this method can be used to quantify a whole range of surface defects in comparison with selected standard defects simply by adjusting x so that the two images appear to be of equal severity or contrast when viewed side by side.

Instead of viewing the TV screen, automatic image analysis can be carried out on the video signal or a mechanical scanner and a single photocell can be used to produce a time varying signal of the distribution of intensity across the image of the defects, for example, as described later.

In the apparatus thus far described the light source 101 comprises a tungsten source. However, a laser could be used with suitable amendment of the optics. Also the surface 115 could be replaced by a position-sensitive photocell to measure the tilt of 108 by means of a separate channel. If the tilt of 108 is measured at a number of adjacent points across the surface, the values obtained may be integrated to obtain the geometrical shape of the surface. Alternatively a laser source could be used with a reference flat between plate 107 and surface 108 so as to form a fringe pattern at TV camera 160. Traditional fringe counting methods could be used to record changes in the distance between this flat and surface 108.

If the surface defect produces only a phase change, such as a step in the level of the surface, it will be hardly visible at TV camera 160. By the use of a phase contrast filter placed over the pinhole image 124, such phase changes can be converted into amplitude changes as in the phase contrast microscope. Other standard techniques of illumination can also be employed, such as dark ground illumination, by the use of an absorbing disk at pinhole 124.

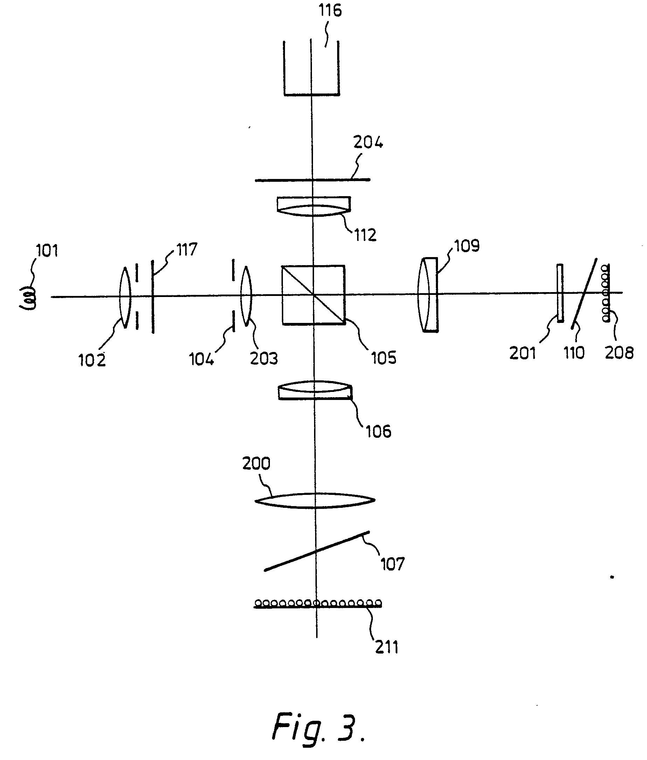

An alternative arrangement of inspection apparatus is shown in Figure 3. Similar parts to those shown in Figure 1 carry the same numbers. Thus Figure 3 incorporates components 101, 102, 103, 104, 105, 106, 107, 109, 110, 112, 116 and 117 of Figure 1. Reference surface is replaced by a retroreflector 208 and between quarter-wave retardation plate 110 and lens 109 there is mounted a scratch reference graticule 201. Test surface 108 is replaced by a retroreflector 211 and between the lens 106 and quarter-wave retardation plate 107 there is mounted the lens 200 under test. There is an additional lens 203 between pinhole 104 and the polarising beam splitter 105 and the focusing beam splitter 120 is omitted.

In the arrangement of Figure 3 light from a tungsten halogen lamp 101 at the focus of lens 102 is imaged by lens 203 into the plane of the lens 106 after reflection at the polarising beam splitter 105. The field iris diaphragm associated with 117 is at the focus of 203 so that it is imaged by lens 106 onto the plane of the lens 200 under test at the focus of lens 106. 104 is an aperture diaphragm used to control the amount of light available. The light transmitted by the lens 200 passes through the quarter-wave plate 107 before falling onto the retroreflector 211 which returns the beam back through the system to be focused by lens 112 through the rotatable polariser 204 onto the TV camera 116. The remaining portion of the light transmitted by polarising beam splitter 105 illuminates lens 109 and the scratch reference graticule 201 at its focal point. The light transmitted by graticule 201 passes through the quarter-wave plate 110 before falling onto the retroreflector 208 which returns the beam back through the system so as to project an image of graticule 201 onto the TV camera. As with the embodiment of Figure 1 the polariser 117 can be rotated to equalise the light transmission of the test and reference channels (ie the beams from lenses 106 and 109 respectively) and the polariser 204 is used to disturb this balance by a measurable amount so as to equalise the visibility of the scratches under test on the lens 200 and the reference scratches on the graticule 201. The quarter-wave plates 107 and 110 are rotated to maximise the intensity of the images of the scratches 200A on lens 200 and graticule 201 respectively.

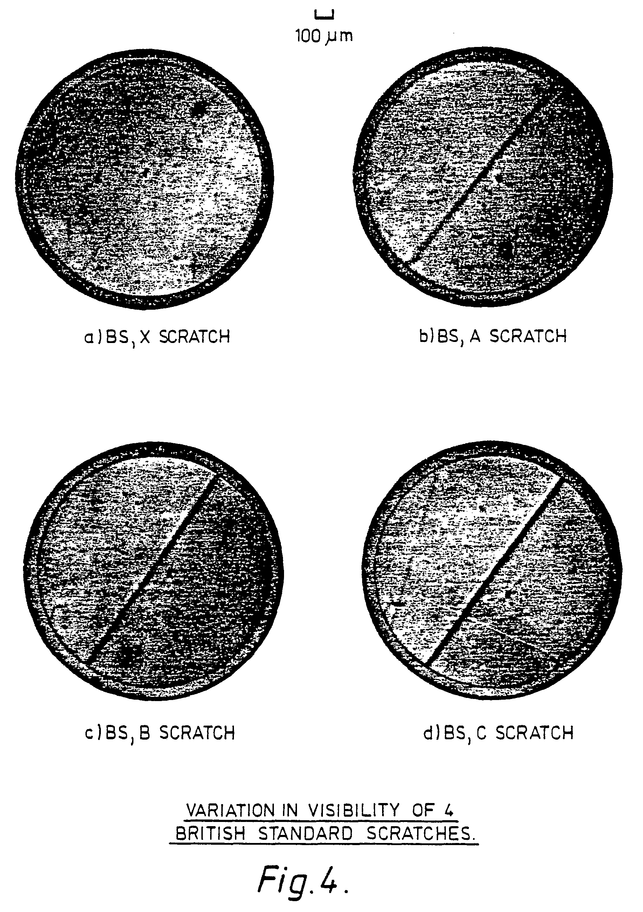

Figures 4A to D show the variation in visibility of 4 Britsh Standard scratches made by etching a rectangular trough in the surface of a glass substrate. The widths and depths of the scratches, which encompassed a visibility range of about 10 to 1, were as follows:

|  | Dimensions | |
| Scratch | Depth micron | Width micron |
| --- | --- | --- |
| X | 0.023 | 16.0 |
| A | 0.078 | 16.9 |
| B | 0.015 | 16.0 |
| C | 0.52 | 17.1 |

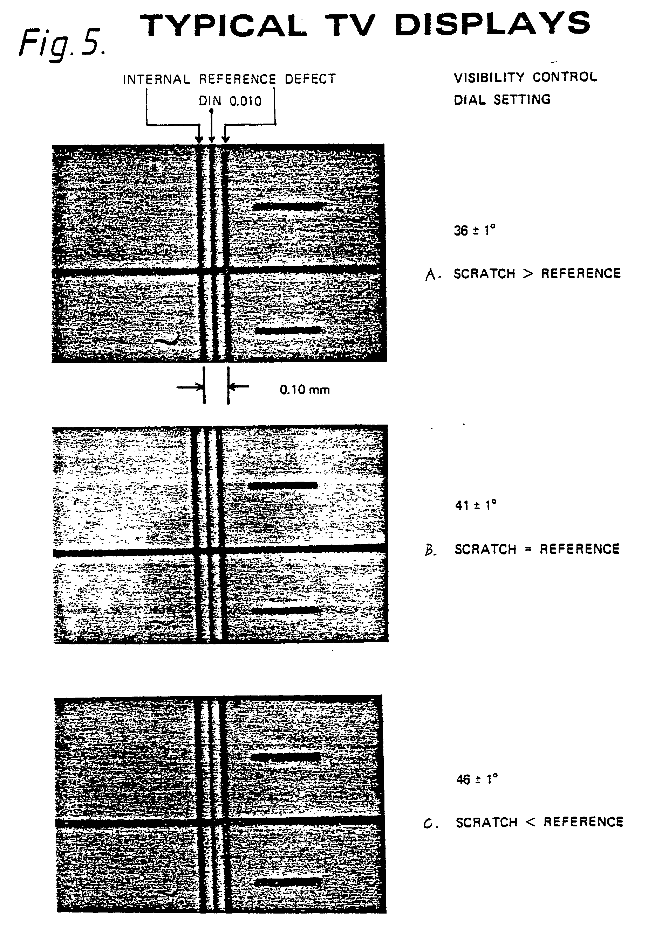

Figures 5A to C show a typical TV display seen when quantifying a scratch which in this case is a DIN 0.010 scratch placed vertically in the centre of the screen.

The internal reference defect takes the form of a graticule as used in an autocollimator with the two vertical parallel lines arranged to straddle the defect to be quantified. In Figure 5B, the visibility (ie the contrast) of the DIN defect and graticule is equal. Figures 5A and 5C show differences in visibility (contrast) resulting from angular rotation of polariser 204 of ±5° from the correct position shown in Figure 5B.

This instrument enables unskilled operators to quantify surface defects consistently, even in the presence of surface contamination. The method can also be used to quantify defects on reflecting surfaces and thin films by appropriate adjustment of polariser 117 and by placing quarter-wave retardation plate 110 between lens 203 and the surface to be tested. A wide variety of surfaces can be examined, including those prepared by diamond turning, etching and conventional polishing.

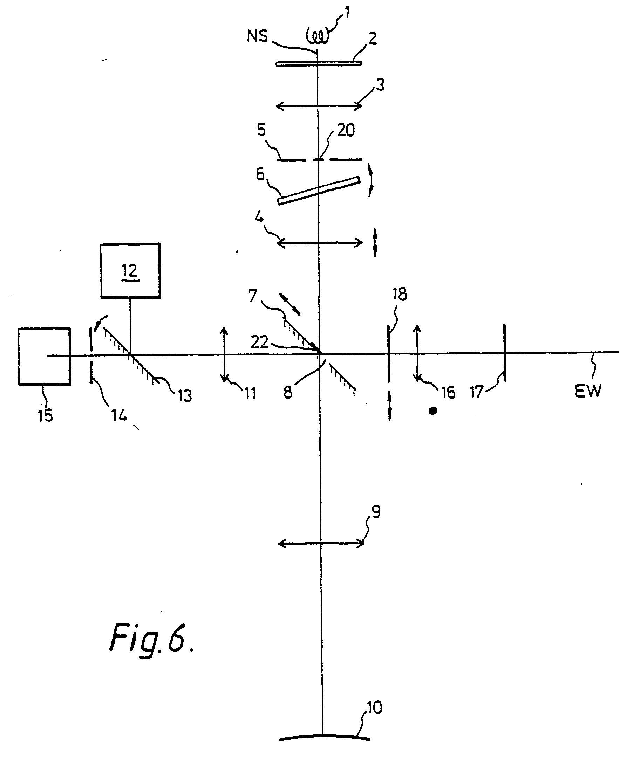

Figures 6 to 8 illustrate a further embodiment of the invention. With regard to the above described arrangements, the use of polarisation is sometimes unsuitable when, for example, large angle cones of light are required to illuminate surfaces of short radius of curvature and relatively large diameter as might be required when inspecting, for example, ophthalmic contact lenses. There is the further problem of variations in reflectivity of a surface when polarised light is used at varying angles of incidence.

The arrangement of Figures 6 to 8 overcomes these problems by the use of a divided aperture beam splitter. In general terms, in place of the use of two differently polarised beams passed respectively to the test defect and reference defect, two normal beams of light are provided and means are provided to vary the intensity of the two beams relative to one another but in such a way that the sum total of their intensities remains substantially constant. As in the previous arrangements a combination of the two beams can be observed or measured and by varying the relative intensities of the two beams the background illumination of the combined beam will remain the same but contrast of the two defects will be changed.

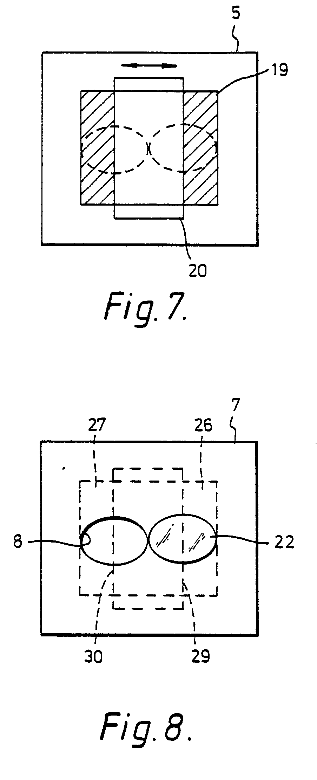

Referring to the Figures 6 to 8, the light from a tungsten halogen lamp 1 is partially scattered by a diffuser 2 and focused by a condenser lens 3 onto a projection lens 4 which projects an image of an aperture 5 through a tilting parallel plate micrometer 6 to a point along the NS axis depending on the setting position along the axis between tilting plate 6 and a beam splitter 7. The aperture 5 is illustrated in more detail in Figure 7 and as can be seen from that Figure comprises a rectangular aperture 19 across which moves a rectangular plate 20 in the direction of the arrows.

The beam splitter 7 is indicated in more detail in Figure 8 and as can be seen comprises an elliptical aperture 8 and an elliptical mirror surface 22. These parts are of an elliptical shape because as is clear from Figure 6 the splitter 7 is at 45° to the optical axis and so far as the beam passing along the optical axis is concerned the aperture 8 and mirror surface 22 will be circular. Figure 8 also shows a projection of the rectangular aperture 19 and rectangular plate 20 on the beam splitter 7 to show their relative dispositions with regard to the optical axis.

If aperture 5 is at the focus of projection lens 4 the image of aperture 5 will be at infinity whereas if projection lens 4 is midway between aperture 5 and the centre point of beam splitter 7, assuming the distance between aperture 5 and beam splitter 7 is four times the focal length of lens 4, then an image of aperture 5 will be formed at the beam splitter 7.

Movement of the projection lens 4 is required to compensate for the different optical powers associated with different radii of curvatures of the surface to be inspected.

Light transmitted by the elliptical aperture 8 which is at the focus of a lens 9 illuminates surface 10 to be inspected, which surface 10 is at the opposite focus of lens 9. The light from the surface 10 to be inspected passes through lens 9 and is reflected via the back surface of the beam splitter 7 and is imaged by a lens 11 having the beam splitter 7 at its focal point either onto a TV camera 12 via a fully reflecting mirror 13 or onto a pinhole aperture 14 placed in front of a photomultiplier 15. In this way, and assuming a slight tilt of surface 10 to prevent all the light from passing back through the elliptical aperture 8, the output of TV camera 12 can be used to inspect the area illuminated on surface 10 or as 10 is traversed at right angles to the optic axis NS, the output of photomultiplier 15 can be used to record microvariations in reflectivity due to scratches or other imperfections on the surface. The preferred method of inspection of the whole of a spherical surface in reflection is by means of a scanning mechanism.

Part of the light falling on beam splitter 7 will be reflected along the EW axis to illuminate a lens 16 with beam splitter 7 at its front focus and the internal reference defect plate 17 at its back focus. The light reflected back from the reference defect 17 will be added to that from the surface 10 to be inspected when a TV camera is used.

In use of the TV camera the mirror 13 is placed in the beam, and manual operation of the instrument may be used to quantify the surface scratches. As already explained the total light flux arriving at TV camera 12 from the reference and test defects 17, 10 is maintained at a constant level at points on the surface where there are no defects but the relative light intensity from the two defects must be varied so that the visibility of a reference and test scratch are rendered the same as described in respect of the preceding embodiments of the invention.

The relative intensities of the light from the reference and test defects could be controlled in a variety of ways including the use of neutral density wedges or by controlling the diameter of the apertures of lens 16 and lens 9. However, a preferred arrangement of varying the light intensity passed to surface 10 and to reference defect 17 is provided by the aperture 5, tilting plate 6 and beam splitter 7.

The mode of operation is best understood from Figure 8. The aperture 5 produces two beams 26, 27 of rectangular cross-section spaced apart from one another. The beam 26 falls on the mirror surface 22 and is therefore reflected to the reference defect 17 and the beam 27 falls on the aperture 8 and passes to the surface 10. The relative intensities of these two beams can be varied in two ways. Referring back to Figure 7 the rectangular plate 20 can be moved from side to side thereby increasing the overall dimensions of one beam with respect to the other. However the total beam area remains the same. Returning to Figure 8, the effect of this will be to move the inner edge of beam 29 and inner edge 30 of beam 27 in unison to the right or left. If the edges 29, 30 move to the right then beam 26 becomes smaller and beam 27 larger so that more light passes through the aperture 8 to the surface 10 being inspected.

Alternatively, however, the obscuring plate 20 may be effectively moved by rotation of the tilting plate 6. The beam passing through the plate 6 will remain on the same axis if the plate 6 is exactly at right angles to the optic axis but as the plate is tilted the beam is displaced sideways. This effectively moves the image of the aperture 5 across the beam splitter 7 which has the same effect, that is, rotation of the tilting plate 6 in one direction will increase the part of the beam 27 passing through to the surface 10 and decrease the part of the beam 26 being reflected by mirror 8 to the reference defect 17 and vice versa. In this way, the image produced by the television camera 12 can be watched until, as before, the relative intensity of the images of the reference defect and defect on surface 10 are the same.

The techniques described here have been proposed to reduce the cost of inspection and measurement of a wide variety of surfaces. The principal features are: rapid inspection, no-contact, area information provided, surface defects can be quantified in terms of their optical severity, a wide variety of surfaces can be inspected including optically polished surfaces, diamond machined surfaces, painted or plated surfaces and the surface can be virtually of any radius of curvature and of any material. The technology can be applied in the following areas: optics electronics, engineering and surface properties research.

Although the discussion here has referred to surface defects, defects within the body of a transparent material may also be examined in the same way. In that case, it will be necessary, of course, for the material under examination to be examined by means of a light beam passing through the material and perhaps reflected from the rear of the material to pass through the material twice or else pass from the rear of the material back into the apparatus.

Savings will result from the greater degree of automation made possible by replacing the traditional slow process of visual and stylus inspection by fast operating, computer controlled inspection using the scanners and sensors described. The apparatus and method may be used also to determine cell densities in micro-biotechnology.

**Claims**

1. Apparatus for comparing an object with a reference object, said object comprising a defect, or an image forming means, or a test pattern, or an absorption line, or a cell, said apparatus comprising:

means (101, 105; 1, 7) for producing two beams of radiation (121, 123) of a wavelength within the range from infra red to ultra violet,

first means (106, 9) for passing a first (123) of the beams to the object (108, 200A, 10) under examination so that part only of said first beam (123) is influenced by the object (108, 200A, 10) under examination,

second means (109, 16) for passing a second

(121) of the beams to the reference object (111, 201, 17) so that part only of said second beam (121) is influenced by the reference object (111, 201, 17),

means (105, 7) for passing the first and second beams from both the objects (108, 200A, 10, 111, 201, 17) to a comparator means (116, 15),

a background radiation varying means (117; 7) for varying the relative intensities of the beams (121, 123) received by the comparator means (116, 15) in such a way that the sum of the intensities of the two beams (121, 123) remain substantially constant,

characterised in that the comparator means (116, 15) is adapted to form and compare images of the two objects (108, 200A, 10, 111, 201, 17), and includes adjustable means (204; 6) to adjust the relative intensities of the images until they are in a predetermined relationship whilst the sum of the intensities of the two beams (121, 123) remain substantially constant, whereby this adjustment of the adjustable means (204; 6) provides an indication of the effect on radiation of the object (108, 200A, 10) under examination.

2. Apparatus as claimed in claim 1 characterised in that the adjustable means (204; 6) is adapted so as to be adjustable so that the images of the object (108, 200A, 10) and the reference object (111, 201, 17) are of identical intensity.

3. Apparatus as claimed in claim 1 or 2 characterised in that the background radiation varying means (117; 7) includes means (117; 7) for equalising the intensity of the parts of the two beams (121, 123) not influenced by the object.

4. Apparatus as claimed in any of claims 1 to 3 characterised in that, means (105; 7) is provided to recombine the two beams (121, 123) so that the comparator means (116, 15) is provided with a single beam including both images.

5. Apparatus as claimed in any of claims 1 to 4 characterised in that the background radiation varying means (117) comprises means (117) for providing polarised light, means (117) for varying the angle of polarisation of the polarised light, and a polarising beam splitter (105) to split the polarised light into the two light beams (123, 121).

6. Apparatus as claimed in claim 5 characterised in that reflective means (208, 211) is provided to reflect the two light beams back to the polarising beam splitter (105) to thereby recombine the two light beams.

7. Apparatus as claimed in claim 6 characterised in that the reflective means (208, 211) comprises retroreflective means (208, 211).

8. Apparatus as claimed in claim 5 characterised in that the object (108) under examination is on an at least part-reflective surface which reflects at least part of the incident light beam (123) back to the polarising beam splitter (105).

9. Apparatus as claimed in claim 8 characterised in that a focusing beam splitter (120) is provided through which the combined two light beams are passed, the focusing beam splitter (120) including a concave reflective surface (113) so that part of the two recombined light beams

are focused to produce a central spot, movement of which relative to the axis of the remainder of the recombined light beams indicates tilt of the surface.

10. Apparatus as claimed in any of claims 1 to 4 characterised in that the background radiation varying means (7) includes means (22) for splitting an incident light beam to provide two light beams, said beam splitter (22) being moveable with respect to the incident light beam to vary the proportion of the incident light beam forming the respective light beams.

11. Apparatus as claimed in claim 10 characterised in that the beam splitter (22) comprises a mirror (22) and an aperture (8), the part of the incident light beam striking the mirror (22) providing one light beam and the part of the incident light beam passing through the aperture (8) providing the other light beam.

12. Apparatus as claimed in claim 11 characterised in that the adjustable means (6) comprises an optically transparent block (6) rotatable about an axis generally transverse the incident light beam.

13. A method for comparing an object with a reference object, said object comprising a defect, or an image forming means, or a test pattern, or an absorption line, or a cell, said method comprising;

providing two beams of radiation (121, 123) of a wavelength within the range from infra red to ultra violet,

passing one beam (123) to the object (108, 200A, 10) under examination so that part only of said one beam (123) is influenced by that object (108, 200A, 10),

passing the second beam (121) to the reference object (111, 201, 17) so that part only of said second beam (121) is influenced by the reference object (111, 201, 17), and,

combining the two beams (121, 123) and examining the combined beam,

the method being characterised by forming images of the objects (108, 200A, 10, 111, 201, 17), and adjusting the relative intensities of the images to be in a predetermined relationship to one another whilst the sum of the intensities of the two beams (121, 123) remain substantially constant, said adjustment providing an indication of the effect on radiation of the object (108, 200, 10) under examination.

14. A method as claimed in claim 13 characterised in that the intensities of the images are adjusted to be equal.

15. A method as claimed in claim 13 or 14 characterised in that the intensity of the parts of the two beams (121, 123) not influenced by the object (108, 200A, 111, 201) are initially equalised.

**Patentansprüche**

1. Einrichtung zum Vergleichen eines Gegenstandes mit einem Bezugsgegenstand, wobei die Gegenstand einer Fehler bzw. Defekt oder eine Bilderzeugungseinrichtung oder ein Testmuster oder eine Absorptionslinie oder eine Zelle, (Zellenstruktur) umfaßt, wobei die Einrichtung umfaßt:

eine Einrichtung (101, 105; 1, 7) zum Erzeugen von zwei Strahlen (121, 123) einer Wellenlänge innerhalb eines Bereiches von Infrarot bis Ultraviolett;

eine erste Einrichtung (106, 9) zum Leiten eines ersten (123) der Strahlen zu dem zu untersuchenden Gegenstand (108, 200A, 10) auf solche Weise, daß nur ein Teil des genannten ersten Strahles (123) durch den zu untersuchenden Gegenstand (108, 200A, 10) beeinflußt wird,

eine zweite Einrichtung (109, 16) zum Leiten eines zweiten (121) der Strahlen zum Bezugsgegenstand (111, 201, 17) auf solche Weise, daß nur ein Teil des genannten zweiten Strahles (121) durch den Bezugsgegenstand (111, 201, 17) beeinflußt wird,

eine Einrichtung (105, 7) zum Leiten des ersten und zweiten Strahles von den beiden Gegenstanden (108, 200A, 10, 111, 201, 17) zu einer Komparatoreinrichtung (116, 15),

eine Hintergrundstrahlungsveränderungseinrichtung (117; 7) zum Verändern der relativen Intensitäten der Strahlen (121, 123), die von der Komparatoreinrichtung (116; 15) empfangen werden, auf solche Weise, daß die Summe der Intensitäten der beiden Strahlen (121, 123) im wesentlichen konstant bleibt,

und dadurch gekennzeichnet ist, daß die Komparatoreinrichtung (116, 15) Bilder von den beiden Gegenständen (108, 200A, 10, 111, 201, 17) erzeugt und vergleicht und eine einstellbare Einrichtung (204; 6) zum Einstellen der relativen Intensitäten der Bilder aufweist, bis sie sich in einem vorgegebenen Verhältnis befinden, während die Summe der Intensitäten der beiden Strahlen (121, 123) im wesentlichen konstant bleibt, wodurch diese Einstellung der einstellbaren Einrichtung (204; 6) eine Anzeige der Wirkung der Bestrahlung des zu untersuchenden Gegenstands (108, 200A, 10) ergibt.

2. Einrichtung nach Anspruch 1, dadurch gekennzeichnet, daß die einstellbare Einrichtung (204; 6) so einstellbar ist, daß die Bilder des Gegenstandes (108, 200A, 10) und des Bezugsgegenstandes (111, 201, 17) von identischer Intensität sind.

3. Einrichtung nach Anspruch 1 oder 2, dadurch gekennzeichnet, daß die Hintergrundstrahlungsveränderungseinrichtung (117; 7) eine Einrichtung (117; 7) zur Egalisierung der Intensität der Teile der beiden Strahlen (121, 123) aufweist, die nicht vom Gegenstand beeinflußt sind.

4. Einrichtung nach einem der Ansprüche 1 bis 3, dadurch gekennzeichnet, daß eine Einrichtung (105; 7) vorgesehen ist, um die beiden Strahlen (121, 123) so zu rekombinieren, daß der Komparatoreinrichtung (116, 15) ein einziger Strahl zugeführt wird, der beide Bilder umfaßt.

5. Einrichtung nach einem der Ansprüche 1 bis 4, dadurch gekennzeichnet, daß die Hintergrundstrahlungsveränderungseinrichtung (117) eine Einrichtung (117) zum Schaffen polarisierten Lichtes, eine Einrichtung (117) zum Verändern des Polarisationswinkels des polarisierten Lichtes, und einen polarisierenden Strahlenteiler (105) umfaßt, um das polarisierte Licht in die beiden Lichtstrahlen (123, 121) zu teilen.

6. Einrichtung nach Anspruch 5, dadurch gekennzeichnet, daß eine reflektierende Einrichtung (208, 211) vorgesehen ist, um die beiden Lichtstrahlen zurück zum polarisierenden Strahlenteiler (105) zu reflektieren und dadurch die beiden Lichtstrahlen to rekombinieren.

7. Einrichtung nach Anspruch 6, dadurch gekennzeichnet, daß die reflektierende Einrichtung (208, 211) eine retroreflektierende Einrichtung (208, 211) umfaßt.

8. Einrichtung nach Anspruch 5, dadurch gekennzeichnet, daß der zu untersuchende Gegenstand (108) sich auf einer wenigstens teilweise reflektierenden Oberfläche befindet, die wenigstens einen Teil des einfallenden Lichtstrahles (123) zurück zum polarisierenden Strahlenteiler (105) reflektiert.

9. Einrichtung nach Anspruch 8, dadurch gekennzeichnet, daß ein fokussierender Strahlenteiler (120) vorgesehen ist, durch den die kombinierten beiden Lichtstrahlen geleitet werden, und daß der fokussierende Strahlenteiler (120) eine konkave reflektierende Fläche (113) umfaßt, sodaß ein Teil der beiden rekombinierten Lichtstrahlen fokussiert wird, um einen zentralen Fleck bzw. Punkt zu bilden, dessen Bewegung in bezug auf die Achse der verbleibenden rekombinierten Lichtstrahlen die Neigung der Oberflächen anzeigt.

10. Einrichtung nach einem der Ansprüche 1 bis 4, dadurch gekennzeichnet, daß die Hintergrundstrahlungsveränderungseinrichtung (7) eine Einrichtung (22) zum Teilen eines einfallenden Lichtstrahles in zwei Lichtstrahlen umfaßt, und daß der genannte Strahlenteiler (22) in bezug auf den einfallenden Lichtstrahl bewegbar ist, um die Proportion des einfallenden Lichtstrahles zu verändern, der die jeweiligen Lichtstrahlen erzeugt.

11. Einrichtung nach Anspruch 10, dadurch gekennzeichnet, daß der Strahlenteiler (22) einen Spiegel (22) und eine Apertur (8) umfaßt und daß der Teil des einfallenden Lichtstrahles, der auf den Spiegel (22) auftritt, einen Lichtstrahl erzeugt und der Teil des einfallenden Lichtstrahles, der durch die Apertur (8) geleitet wird, den anderen Lichtstrahl erzeugt.

12. Einrichtung nach Anspruch 11, dadurch gekennzeichnet, daß die einstellbare Einrichtung (6) einen optisch transparenten Block (6) umfaßt, der um eine Achse im allgemeinen quer zum einfallenden Lichtstrahl drehbar ist.

13. Verfahren zum Vergleichen eines Gegenstandes mit einem Bezugsgegenstand, wobei der genannte Gegenstand einen Fehler bzw. Defekt oder eine Bilderzeugungseinrichtung oder ein Testmuster oder eine Absorptionslinie oder eine Zelle (Zellenstruktur) aufweist, und wobei das genannte Verfahren umfaßt:

Erzeugen von zwei Strahlen (121, 123) einer

Wellenlänge innerhalb des Bereiches von Infrarot bis Ultraviolett,

Leiten des einen Strahles (123) zum zu untersuchenden Gegenstand (106, 200A, 10) auf solche Weise, daß nur ein Teil des genannten einen Strahles (123) von dem gegenannten Gegenstand (108, 200A, 10) beeinflußt wird,

Leiten des zweiten Strahles (121) zum Bezugsgegenstand (111, 201, 17) auf solche Weise, daß nur ein Teil des genannten zweiten Strahles (121) durch den Bezugsgegenstand (111, 201, 17) beeinflußt wird und

Kombinieren der beiden Strahlen (121, 123) und Untersuchen der kombinierten Strahlen,

und dadurch gekennzeichnet ist, daß Bilder von den Gegenständen (108, 200A, 10, 111, 201, 17) erzeugt werden und die relativen Intensitäten der Bilder so eingestellt werden, daß sie sich in einem vorgegebenen Verhältnis zueinander befinden, während die Summe der Intensitäten der zwei Strahlen (121, 123) im wesentlichen konstant bleibt und daß die genannte Einstellung eine Anzeige der Wirkung des zu untersuchenden Gegenstandes (108, 200A, 10) darstellt.

14. Verfahren nach Anspruch 13, dadurch gekennzeichnet, daß die Intensitäten der Bilder so eingestellt werden, daß sie gleich sind.

15. Verfahren nach Anspruch 13 oder 14, dadurch gekennzeichnet, daß die Intensität der Teile der beiden Strahlen (121, 123), die nicht von den Gegenständen (108, 200A, 111, 201 beeinflußt werden, anfänglich egalisiert wird.

**Revendications**

1. Appareil pour comparer un object avec un objet de référence, ledit objet comprenant un défaut, ou un moyen formant image, ou un motif à tester, ou une ligne d'absorption, ou une cellule, ledit appareil comprenant:

des moyens (101, 105; 1, 7) pour produire deux faisceaux de rayonnement (121, 123) d'une longueur d'onde comprise dans le domaine des infrarouges aux ultraviolets,

un premier moyen (106, 9) pour faire passer un premier (123) des faisceaux vers l'objet à examiner (108, 200A, 10) de sorte qu'une partie seulement dudit premier faisceau (123) est influencée par l'objet à examiner (108, 200A, 10),

un second moyen (109, 16) pour faire passer un second (121) des faisceaux vers l'objet de référence (111, 201, 17) de sorte qu'une partie seulement dudit second faisceau (121) est influencée par l'objet de référence (111, 201, 17),

des moyens (105, 7) pour faire passer les premier et second faisceaux depuis les deux objets (108, 200A, 10, 111, 201, 17) vers un moyen comparateur (116, 15),

un moyen (117; 7) modifiant le rayonnement naturel pour modifier les intensités relatives des faisceaux (121, 123) reçus par le moyen comparateur (116, 15) de telle façon que la somme des intensités des deux faisceaux (121, 123) reste sensiblement constante,

caractérisé en ce que le moyen comparateur (116, 15) est adapté pour former et comparer des images des deux objets (108, 200A, 10, 111, 201, 17) et comprend un moyen réglable (204; 6) pour régler les intensités relatives des images jusqu'à ce qu'elles soient dans une relation prédéterminée tandis que la somme des intensités des deux faisceaux (121, 123) reste sensiblement constante, ce réglage du moyen réglable (204; 6) fournissant ainsi une indication de l'effet sur le rayonnement de l'objet à examiner (108, 200A, 10).

2. Appareil selon la revendication 1, caractérisé en ce que le moyen réglable (204; 6) est adapté de façon à être réglable de sorte que les images de l'objet (108, 200A, 10) et de l'objet de référence (111, 201, 17) soient d'intensité identique.

3. Appareil selon la revendication 1 ou la revendication 2, caractérisé en ce que le moyen (117; 7) modifiant le rayonnement naturel comprend un moyen (117; 7) pour égaliser l'intensité des parties des deux faisceaux (121, 123) non influencées par l'objet.

4. Appareil selon l'une des revendications 1 à 3, caractérisé en ce que le moyen (105; 7) est prévu pour combiner les deux faisceaux (121, 123) de sorte que le moyen comparateur (116, 15) reçoit un seul faisceau comprenant les deux images.

5. Appareil selon l'une des revendications 1 à 4, caractérisé en ce que le moyen (117) modifiant le rayonnement naturel comprend un moyen (117) pour fournir une lumière polarisée, un moyen (117) pour modifier l'angle de polarisation de la lumière polarisée, et un séparateur de faisceau polarisant (105) pour séparer la lumière polarisée en les deux faisceaux lumineux (123, 121).

6. Appareil selon la revendication 5, caractérisé en ce qu'un moyen réfléchissant (208, 211) est prévu pour réfléchir les deux faisceaux lumineux vers le diviseur de faisceau polarisant (105) pour ainsi recombiner les deux faisceaux lumineux.

7. Appareil selon la revendication 6, caractérisé en ce que le moyen réfléchissant (208, 211) comprend un moyen rétro-réfléchissant (208, 211).

8. Appareil selon la revendication 5, caractérisé en ce que l'objet (108) qui est examiné est sur une surface au moins partiellement réfléchissante qui réfléchit au moins une partie du faisceau lumineux incident (123) vers le diviseur de faisceau polarisant (105).

9. Appareil selon la revendication 8, caractérisé en ce qu'un séparateur de faisceau focalisant (120) est prévu à travers lequel passent les deux faisceaux lumineux combinés, le diviseur de faisceau focalisant (120) comprenant une surface réfléchissante concave (113) de sorte qu'une partie des deux faisceaux lumineux recombinés est focalisée pour produire un point central, dont le mouvement par rapport à l'axe du reste des faisceaux lumineux recombinés indique l'inclinaison de la surface.

10. Appareil selon l'une des revendications 1 à 4, caractérisé en ce que le moyen (7) modifiant le rayonnement naturel comprend un moyen (22) pour diviser un faisceau lumineux incident pour

fournir deux faisceaux lumineux, ledit diviseur de faisceau (22) étant déplaçable par rapport au faisceau lumineux incident pour modifier la proportion du faisceau lumineux incident formant les faisceaux lumineux respectifs.

11. Appareil selon la revendication 10, caractérisé en ce que le diviseur de faisceau (22) comprend un miroir (22) et une ouverture (8), la partie du faisceau lumineux incident qui frappe le miroir (22) fournissant un faisceau lumineux et la partie du faisceau lumineux incident qui traverse l'ouverture (8) fournissant l'autre faisceau lumineux.

12. Appareil selon la revendication 11, caractérisé en ce que le moyen réglable (6) comprend un bloc optiquement transparent (6) rotatif autour d'un axe généralement transversal par rapport au faisceau lumineux incident.

13. Procédé pour comparer un objet avec un objet de référence, ledit objet comprenant un défaut, ou un moyen formant une image, ou un motif à tester, ou une ligne d'absorption, ou une cellule, ledit procédé comprenant:

la fourniture de deux faisceaux de rayonnement (121, 123) d'une longueur d'onde comprise dans le domaine des infrarouges aux ultraviolets,

le passage d'un faisceau (123) vers l'objet à examiner (108, 200A, 10) de sorte qu'une partie seulement dudit faisceau (123) est influencée par cet objet (108, 200A, 10),

le passage du second faisceau (121) vers l'objet de référence (111, 201, 17) de sorte qu'une partie seulement dudit second faisceau (121) est influencée par l'objet de référence (111, 201, 17), et,

la combinaison des deux faisceaux (121, 123) et l'examen du faisceau combiné,

le procédé étant caractérisé par la formation d'images des objets (108, 200A, 10, 111, 201, 17) et par le réglage des intensités relatives des images afin qu'elles se trouvent dans une relation prédéterminée l'une par rapport à l'autre tandis que la somme des intensités des deux faisceaux (121, 123) reste sensiblement constante, ledit réglage fournissant une indication de l'effet sur le rayonnement de l'objet à examiner (108, 200, 10).

14. Procédé selon la revendication 13, caractérisé en ce que les intensités des images sont réglées pour être égales.

15. Procédé selon la revendication 13 ou la revendication 14, caractérisé en ce que l'intensité des parties des deux faisceaux (121, 123) non influencées par l'objet (108, 200A, 111, 201) sont égalisées initialement.

Fig.1.

POLARISATION DIRECTIONS

(a) TEST BEAM

(b) REFERENCE BEAM

(c) COMBINED BEAMS

$x=0°$

A

aA

+

=

aA

*Fig.2.* $x=55°$

+

=

$x=90°$

+

B

bB

=

Fig. 3.

⊔
100 μm

a) BS, X SCRATCH

b) BS, A SCRATCH

c) BS, B SCRATCH

d) BS, C SCRATCH

VARIATION IN VISIBILITY OF 4
BRITISH STANDARD SCRATCHES.

Fig.4.

# TYPICAL TV DISPLAYS

*Fig.5.*

INTERNAL REFERENCE DEFECT

DIN 0.010

VISIBILITY CONTROL
DIAL SETTING

0.10 mm

36 ± 1°

A. SCRATCH > REFERENCE

41 ± 1°

B. SCRATCH = REFERENCE

46 ± 1°

C. SCRATCH < REFERENCE

Fig.6.

5

19

20

**Fig. 7.**

27    26    7

8    22

30    29

**Fig. 8.**